# EUROPÄISCHE PATENTSCHRIFT

(11) **EP 0 920 390 B1**
(45) Veröffentlichungstag und Bekanntmachung des Hinweises auf die Patenterteilung: **26.11.2003**
(21) Anmeldenummer: 98919164.8
(22) Anmeldetag: 26.03.1998
(51) Int. Cl.: B60T 13/74, F16D 63/00

(54) **ELEKTROMECHANISCH BETÄTIGBARE FESTSTELLBREMSE FÜR KRAFTFAHRZEUGE**
ELECTROMECHANICALLY ACTUATED PARKING BRAKE FOR MOTOR VEHICLES
FREIN DE STATIONNEMENT A COMMANDE ELECTROMECANIQUE POUR AUTOMOBILES

(30) Priorität: 05.04.1997 DE 19714046
(43) Veröffentlichungstag der Anmeldung: 09.06.1999
(73) Patentinhaber: ITT MANUFACTURING ENTERPRISES, INC., Wilmington, Delaware 19801 (US)
(72) Erfinder: WEILER, Rolf, D-65817 Eppstein (DE); BALZ, Jürgen, D-65510 Hünstetten-Oberlibbach (DE); DENHARD, Werner, D-63607 Wächtersbach (DE)
(74) Vertreter: Dusil, Vladimir, Dipl.-Ing.
(86) Internationale Anmeldenummer: EP9801798
(87) Internationale Veröffentlichungsnummer: WO98045152

(56) Entgegenhaltungen:
- EP-A- 0 594 233
- DE-A- 2 208 936
- DE-A- 4 129 919
- US-A- 4 850 459

## Beschreibung

Die Erfindung betrifft eine elektromechanisch betätigbare Feststellbremse für Kraftfahrzeuge, bestehend aus einer Trommelbremse sowie einer die Trommelbremse betätigenden Betätigungseinheit, wobei die Trommelbremse zwei Bremsbacken und ein Spreizschloß aufweist, das mittels eines Kraftübertragungselements mit der Betätigungseinheit zusammenwirkt und wobei die Betätigungseinheit aus einem Elektromotor sowie einem zwischen dem Elektromotor und dem Kraftübertragungselement angeordneten Untersetzungsgetriebe besteht.

Eine derartige elektromechanisch betätigbare Feststellbremse ist z. B. aus der deutschen Offenlegungsschrift DE 41 29 919 A1 bekannt. Dem Offenbarungsgehalt der erwähnten Veröffentlichung ist u.a. eine Kombination eines als Stellmotor wirkenden Elektromotors mit einer Trommelbremse zu entnehmen, wobei der Elektromotor in der Nähe der zugeordneten Radbremse angeordnet ist oder mit der Radbremse auch eine Baueinheit bilden kann. Dem vorbekannten Stand der Technik sind jedoch keine Hinweise auf die konkrete Ausführung der Betätigungseinheit zu entnehmen.

Aus der US-PS 4850459 ist eine Betätigungseinheit der genannten Art bekannt, bei der ein Elektromotor mittelbar über einen Spindelantrieb die Bremsbacken einer Trommelbremse auseinander spreizt. Dabei ist zwischen den Rotor des Elektromotors und dem Spindelantrieb ein Planetengetriebe geschaltet, so daß Elektromotor und Getriebe räumlich hintereinander liegen. Bei dieser bekannten Bestätigungseinheit muß die Betätigungseinheit jeweils an die spezielle Trommelbremse angepaßt werden. Hinzu kommt, daß durch die hintereinander geschaltete Bauweise von Motor und Getriebe die bekannte Bestätigungseinrichtung hinsichtlich ihrer Länge erhebliche Abmessungen besitzt.

Die Erfindung geht daher aus von einer Feststellbremse der sich aus dem Oberbegriff des Anspruchs 1 ergebenden Gattung. Es ist Aufgabe der vorliegenden Erfindung eine elektromechanisch betätigbare Feststellbremse der genannten Gattung vorzuschlagen, die bei hoher Zuverlässigkeit bzw. Funktionssicherheit eine geringe Gesamtbaugröße, insbesondere eine geringe axiale Baulänge der Betätigunseinheit aufweist.

Diese Aufgabe wird erfindungsgemäß dadurch gelöst, daß das Untersetzungsgetriebe radial umgreift.
Um in der Anordnung der der jeweiligen Trommelbremse zugeordneten Betätigungseinheit an dem Kraftfahrzeuge von dem Aufbau der jeweiligen Trommelbremse bzw. des Fahrzeugs weitgehend frei zu sein empfiehlt sich in Weiterbildung der Erfindung die Anwendung der Merkmalskombination nach Einspruch 2. Die kompakten Abmessungen der Betätigungseinheit erleichtern zu dem deren Einbau auch bei beschränktem Bauchraum.

Der Spindeltrieb kann dabei in vorteilhaften Weiterbildungen der Erfindung entweder selbsthemmend oder nicht selbsthemmend ausgelegt sein. Während die erstgenannte Lösung automatisch die gesetzliche Forderung nach einem stromlosen, mechanischen Verriegeln erfüllt, muß für einen nicht selbsthemmenden Spindeltrieb, z. B. einen Kugelgewindetrieb, eine zusätzliche mechanische oder elektromechanische Verriegelung vorgesehen werden.

In ganz besonders vorteilhafter Weise ist die Verriegelungseinrichtung durch einen axial zum Rotor verschiebbaren Anker eines Haftmagneten gebildet, der im stromlosen Zustand des Elektromotors mittels einer Feder mit einer Reibscheibe in Eingriff bringbar ist, die mit dem Rotor zusammenwirkt. Der Anker ist dabei vorzugsweise durch den vom Stator des Elektromotors erzeugten magnetischen Streufluß betätigbar.

Eine andere Möglichkeit der Ausführung der erwähnten Verriegelung besteht darin, daß die Verriegelungseinrichtung durch eine mit dem Rotor zusammenwirkende elektromagnetische Bremseinrichtung gebildet ist.

Eine optimale Kraftübertragung zwischen Kraftübertragungselement und Spreizschloß wird bei einer anderen vorteilhaften Weiterbildung des Erfindungsgegenstandes dadurch erreicht, daß die das Kraftübertragungelement bildende Spindel verdrehgesichert gelagert ist.

Eine kostengünstig herstellbare Ausführung des Erfindung besteht darin, daß das Gehäuse des Elektromotors als Blechtiefziehteil ausgebildet ist.

Um eine sinnvolle Realisierung der vorhin erwähnten Verdrehsicherung zu ermöglichen sieht eine weitere vorteilhafte Ausgestaltung des Erfindungsgegenstandes vor, daß das Gehäuse einen ins Innere des Rotors hineinragenden, axialen rohrförmigen Fortsatz aufweist, der das dem Spreizschloß zugewandte Ende der Spindel verdrehgesichert aufnimmt und vorzugsweise ein Innenpolygonprofil aufweist, das mit dem entsprechend geformten Ende der Spindel zusammenwirkt.

Bei einer anderen kostengünstig herstellbaren Ausführung des Erfindung ist der Rotor als ein rohrförmiges Blechteil ausgebildet, das die Spindelmutter des Spindeltriebs bildet. Eine Alternativlösung besteht darin, daß im Rotor eine Kugelgewindemutter eingepreßt ist.

Es wird des weiteren vorgeschlagen, daß der Rotor an einem Ende in einem Festlager gelagert ist, das im Gehäuse des Elektromotors durch Einrollen des Rotorendes gehalten ist.

Außerdem ist es von Vorteil, wenn das Gehäuse des Elektromotors an seinem der Trommelbremse abgewandten Ende mittels eines Lagerdeckels verschlossen ist, der durch Einrollen des Gehäuses fixiert ist. Der Lagerdeckel nimmt dabei vorzugsweise ein Loslager auf, in dem das andere Ende des Rotors gelagert ist.

In vorteilhafter Weise begrenzt der Lagerdeckel einen Hohlraum, der der Aufnahme einer elektronischen Schaltung zur Ansteuerung des Elektromotors dient. Durch diese Maßnahme wird eine Integration der der Motoransteuerung dienenden Elektronik in das Motorgehäuse erreicht.

Bei einer weiteren konstengünstig herstellbaren Ausführungsvariante der Erfindung besteht der Lagerdeckel aus Kunststoff und weist eine Kabeldurchführung auf, durch die eine vorzugsweise umspritzte Anschlußleitung durchführbar ist.

Eine einwandfrei funktionierende Kraftübertragung zwischen der Betätigungseinheit und dem Spreizschloß der Trommelbremse wird erfindungsgemäß durch die Verwendung eines kurzen, flexiblen Stahlseilzuges erreicht, der im Kraftübertragungselement verpreßt bzw. verquetscht ist und an seinem dem Spreizschloß zugewandten Ende mit einer Zugöse versehen ist. Der Stahlseilzug besteht dabei vorzugsweise aus einer Stahllitze, die mit einer Kunststoffummantelung versehen ist. Der Stahlseilzug wird mittels eines Faltenbalgs gegen Eindringen von Schmutz in den Elektromotor geschützt, wobei das der Zugöse abgewandte Ende des Faltenbalges O-Ring-förmig ausgebildet ist und von einer am Gehäuse des Elektromotors vorgesehenen, vorzugsweise kreisförmigen Vertiefung aufgenommen wird. Das dem Spreizschloß zugewandte Faltenbalgende ist mit der Kunststoffummantelung verschweißt, insbesondere ultraschallverschweißt und damit sicher gegen Eindringen von Schmutz oder Feuchtigkeit abgedichtet. Durch Verquetschen des motorseitigen Seilzugendes innerhalb einer konisch verlaufenden Sackbohrung des Kraftübertragungselementes wird das Motorinnere zuverlässig vor eindringender Feuchtigkeit geschützt.

Als Antriebsmotoren für die Betätigungseinheit der erfindungsgemäßen Feststellbremse kommen insbesondere elektronisch kommutierte DC-Elektromotoren oder DC-Bürstenmotoren in Frage. Die erwähnten Motorarten sind zur Erzeugung hoher Drehmomente aus dem Stillstand besonders geeignet.

Um eine erhebliche Reduzierung des vom Elektromotor aufzubringenden erforderlichen Antriebsmoments zu erreichen ist zwischen dem Rotor und dem Untersetzungsgetriebe ein Planetengetriebe wirkungsmäßig angeordnet, dessen Sonnenrad an einem Ende des Rotors ausgebildet ist. Die Planetenräder wirken dabei vorzugsweise mit einem Innenzahnkranz zusammen, der auf der Innenseite des Gehäuses des Elektromotors ausgebildet ist. Dabei ist es besonders sinnvoll, wenn die Planetenräder an einem radialen Kragen der Spindelmutter angeordnet sind, die in ihrem dem Kragen benachbarten Bereich mit einem Radiallager zusammenwirkt, das am Gehäuse des Elektromotors abgestützt ist.

Eine optimale, bauraumsparende Befestigung der Betätigungseinheit wird bei einer weiteren vorteilhaften Ausführung der Erfindung dadurch erreicht, daß das Gehäuse des Elektromotors mit einer Einschnürung versehen ist, die der Befestigung der Betätigungseinheit durch Einrollen in einem Ausschnitt eines die Trommelbremse vor Verunrenigungen schützenden Schmutzblechs dient. Die Trommelbremse kann vorzugsweise als Duo-Servo-Bremse ausgeführt sein.

Weitere Merkmale und Vorteile der elektromechanisch betätigbaren Festestellbremse nach der Erfindung ergeben sich aus der nachfolgenden Beschreibung von drei Ausführungsbeispielen unter Bezugnahme auf die beiligende Zeichnung. In der Zeichnung zeigt:
- Fig. 1: eine erste Ausführung der erfindungagemäßen, elektromechanisch betätigbaren Feststellbremse im Axialschnitt,
- Fig. 2: eine zweite Ausführung des Erfindungsgegenstandes in einer der Fig. 1 entsprechenden Darstellung, und
- Fig. 3: eine dritte Ausführung des Erfindungsgegenstandes in einer der Fig. 1 entsprechenden Darstellung.

Die in der Zeichnung dargestellte, elektromechanisch be-tätigbare Feststellbremse nach der Erfindung besteht im wesentlichen aus einer an sich bekannten Trommelbremse, vorzugsweise einer Duo-Servo-Bremse 1, sowie einer Betätigungseinheit 2, deren als Blechteil ausgebildetes Gehäuse 3 in einem nicht näher bezeichneten Ausschnitt eines die Trommelbremse 1 vor Verunreinigungen schützenden Schmutzblechs 4 befestigt ist. Zu diesem Zweck weist das Gehäuse 3 eine Einschnürung 26 auf, die ein Einrollen des den Ausschnitt begrenzenden Randbereichs des Schmutzblechs 4 ermöglicht. Die Betätigungs- oder Antriebseinheit 2 steht in kraftübertragender Verbindung mit einem Spreizschloß 5, das eine mechanische Betätigung von zwei Bremsbacken ermöglicht, von denen eine dargestellt und mit dem Bezugszeichen 6 versehen ist. Durch die Betätigung werden die Bremsbacken 6, mit einer Bremstrommel 7 in Eingriff gebracht.

Die Betätigungseinheit 2 besteht aus einem Elektromotor 8, einem Untersetzungsgetriebe 9 sowie einem Kraftübertragungselement 10, das über einen Stahlseilzug 14 mit dem vorhin erwähnten Spreizschloß 5 gekoppelt ist. Der vorhin erwähnte Stahlseilzug 14, der vorzugsweise eine Stahllitze sowie eine diese umgebende Kunststoffummantelung aufweist, ist an seinem dem Spreizschloß 5 zugewandten Ende mit einer nicht gezeigten Zugöse bzw. einem Nippel versehen, während sein anderes Ende im Kraftübertragungselement 10 bzw. 16 verpreßt oder verquetscht ist. Dem Schutz des Elektromotors 8 und des Stahlseilzuges 14 vor Verunreinigungen dient dabei vorzugsweise ein zwischen Elektromotor 8 und Spreizschloß 5 angeordneter elastischer Faltenbalg 15, dessen dem Gehäuse 3 zugeordneter Randbereich O-ringförmig ausgeformt und in einer am Gehäuse 3 ausgebildeten kreisförmigen Vertiefung 25 so angeordnet ist, daß er zwischen dem Gehäuse 3 und einer Trägerplatte 27 eingeklemmt ist. Das dem Spreizschloß 5 zugewandte Faltenbalgende ist mit der Kunststoffummantelung verschweißt, insbesondere ultraschallverschweißt, wodurch der Stahlseilzug 14 gegenüber Schmutz und Feuchtigkeit zuverlässig abgedichtet ist.

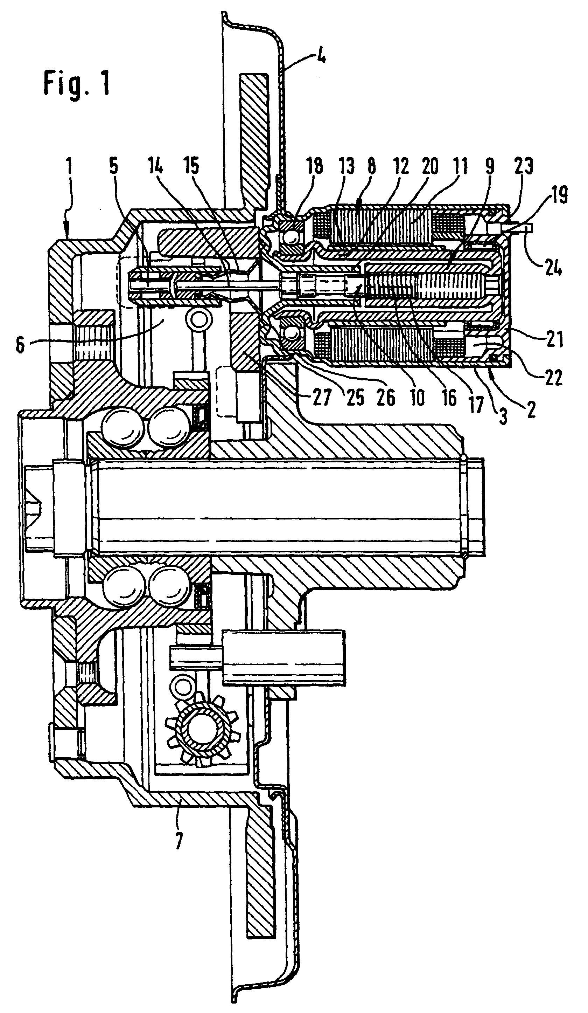

Der im in Fig. 1 dargestellten Beispiel gezeigte Elektromotor 8 ist als ein elektronisch kommutierbarer Motor ausgeführt, wobei auch eine Ausführung als DC-Bürstenmotor in Frage kommt. Der mit dem Bezugszeichen 11 bezeichnete Stator des Elektro-motors 8 ist in dem aus Blech gezogenen Gehäuse 3 unbeweglich angeordnet, während sein Rotor 12 vorzugsweise als ein rohrförmiges Blechteil ausgebildet ist, auf dessen Oberfläche Permanentmagnetsegmente 13 aufgeklebt sind. Der Rotor 12 ist dabei an seinem der Trommel 7 zugewandten Ende in einem im Gehäuse 3 durch Einrollen des Rotorendes gehaltenen Festlager 18 gelagert, während für die Lagerung seines der Trommel 7 abgewandten Endes ein Loslager 19 sorgt. Das Untersetzungsgetriebe 9 ist dabei vorzugsweise koaxial zum Rotor 12, von diesem radial umgriffen, angeordnet.

Wie Fig. 1 weiter zu entnehmen ist, ist das darin gezeigte Untersetzungsgetriebe 9 als ein selbsthemmender Spindeltrieb ausgebildet, dessen Spindel 16 das Kraftübertragungselement 10 bildet und dessen Spindelmutter 17 durch ein koaxial zum Rotor 12 angeordnetes, mit dem Rotor 12 vorzugsweise einstückig ausgebildetes rohrförmiges Teil gebildet ist. Der Verdrehsicherung der Spindel 16 dient ein vorzugsweise ins Innere des Rotors 12 sich hineinerstreckender, axialer rohrförmiger Fortsatz 20 des Gehäuses 3. Der erwähnte Fortsatz 20 weist dabei ein Innenpolygonprofil auf, das mit dem entsprechend geformten Ende der Spindel 16 zusammenwirkt.

Schließlich ist das Gehäuse 3 der Betätigungseinheit 2 nach außen durch einen Lagerdeckel 21 verschlossen, der durch Einrollen des Randbereichs des Gehäuses 3 fixiert ist. Der vorzugsweise aus geeignetem Kunststoff bestehende Lagerdekkel 21, in dem das vorhin erwähnte Loslager 19 angeordnet ist, begrenzt im Gehäuse 3 der Betätigungseinheit 2 einen ringförmigen Hohlraum 22, in dem beispielsweise nicht gezeigte elektronische Bauteile angeordnet sein können, die der Steuerung des Elektromotors 8 dienen. Außerdem ist im Lagerdeckel 21 eine Kabeldurchführung 23 vorgesehen, durch die eine zum Stator 11 des Elektromotors 8 führende, vorzugsweise umspritzte Anschlußleitung 24 hindurchgeführt werden kann.

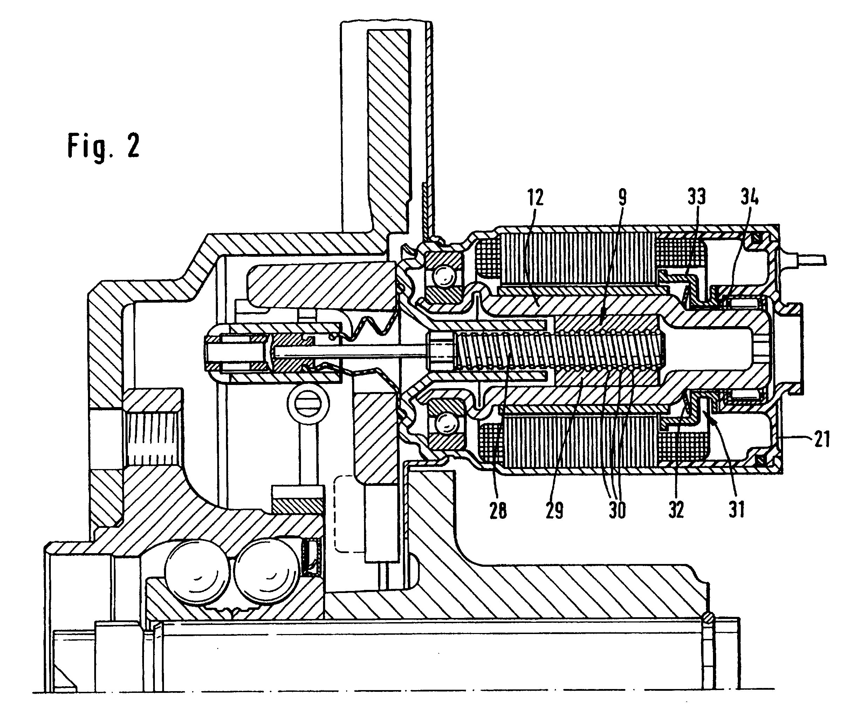

Bei der in Fig. 2 gezeigten Ausführung des Erfindungsgegenstandes ist das im Zusammenhang mit Fig. 1 erwähnte Untersetzungsgetriebe 9 als ein nicht selbsthemmender Spindeltrieb bzw. ein Kugelgewindetrieb 28, 29, 30 ausgebildet. Der Kugelgewindetrieb besteht aus einer Gewindespindel 28 sowie einer vorzugsweise im Rotor 12 eingepreßten Kugelgewindemutter 29, deren Drehbewegung mittels Kugelreihen 30 in eine translatorische Bewegung der Gewindespindel 28 umgewandelt wird. Um ein Lösen der erfindungsgemäßen Feststellbremse zu verhindern wirkt der gezeigte Kugelgewindetrieb 28 - 30 mit einer Verriegelungseinrichtung 31 zusammen, die im dargestellten Beispiel durch einen Anker 33 eines Haftmagneten gebildet ist, der durch den vom Stator 11 des Elektromotors 8 erzeugten magnetischen Streufluß betätigbar ist. Der vorzugsweise topfförmig ausgeführte Anker 33 ist auf dem Rotor 12 gegenüber diesem verdrehgesichert und axial verschiebbar angeordnet und wird im stromlosen Zustand des Stators 11 durch eine Tellerfeder 32 gegen eine Reibfläche 34 gedrückt, die an dem vorhin erwähnten Lagerdeckel 21 ausgebildet ist. Beim Bestromen des Elektromotors 8 wird der Anker 33 durch die Wirkung des vom Stator 11 erzeugten Streuflusses gegen die Kraft der Tellerfeder 32 angezogen und damit außer Eingriff mit der Reibfläche 34 gebracht, so daß sich der Rotor 12, den Anker 33 mitnehmend, frei drehen kann. Im Rahmen der vorliegenden Erfindung ist es jedoch auch denkbar, zum gleichen Zweck eine mit dem Rotor 12 zusammenwirkende, vom Bestromen des Stators 12 unabhängig betätigbare elektromagnetische Bremseinrichtung vorzusehen.

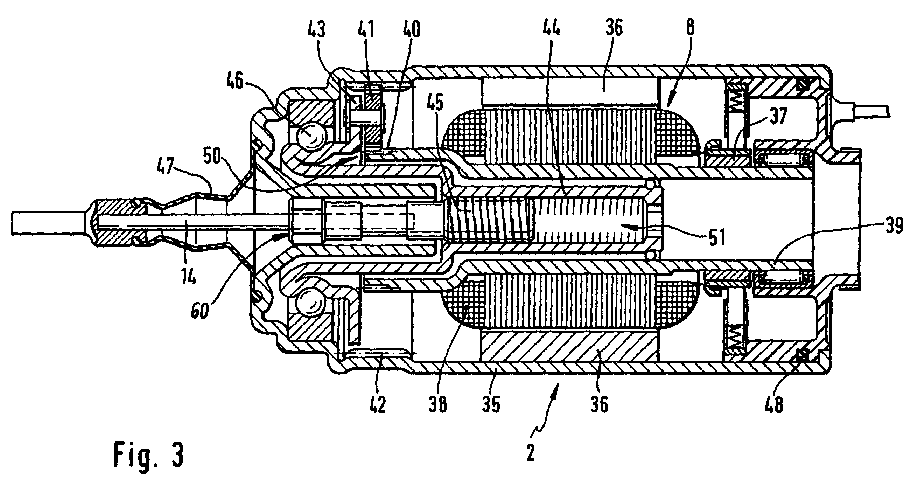

Schließlich ist in Fig. 3 eine weitere Ausführungsform der bei der Erfindung verwendbaren Betätigungseinheit 2 gezeigt. Dabei ist der Elektromotor 8 als ein Gleichstrom-Bürstenmotor ausgeführt, dessen Stator durch im Gehäuse 35 der Betätigungseinheit angeordnete Permanentmagnet-Segmente 36 gebildet ist. Der Rotor, dem Strom mittels eines Kollektors 37 zugeführt wird, ist durch ein eine Ankerwicklung 38 tragendes, zweifach gelagertes Rohr 39 gebildet, dessen der nicht gezeigten Trommel zugewandter Endbereich als ein Sonnenrad 40 eines mit 50 bezeichneten Planetengetriebes ausgebildet ist, das wirkungsmäßig zwischen dem Elektromotor 8 und einem Untersetzungsgetriebe 51 geschaltet ist. Der Aufbau des Untersetzungsgetriebes 51 entspricht dem des in Fig. 1 dargestellten Gewindetriebs, so daß sich eine ausführliche Beschreibung erübrigt. Das Sonnenrad 40 treibt Planetenräder 41 an, die in einem Zahnkranz 42 umlaufen, der als Bestandteil des Gehäuses 35 an dessen Innenseite eingeprägt ist.

Die Planetenräder 41 werden von einem radialen Steg 43 getragen, der an dem der nicht gezeigten Trommelbremse zugewandten Ende der rohrförmig gestalteten Gewindemutter 44 ausgebildet ist, die die Spindel 45 antreibt. Der Steg 43, der über ein Hauptlager 46 im Gehäuse 35 gelagert ist, dient somit als Abtrieb des Planetengetriebes 50. Die gesamte Antriebs- bzw. Betätigungseinheit ist gekapselt, d.h. über die Dichtungen 47 und 48 gegen Eindringen von Schmutz und Feuchtigkeit geschützt.

Zur zusätzlichen Abdichtung des Elektromotors 8 insbesondere gegenüber Feuchtigkeit ist der Stahlseilzug 14 innerhalb des als Spindel 45 ausgebildeten Kraftübertragungselementes verpreßt bzw. verquetscht. Im einzelnen ist dazu innerhalb der Spindel 45 eine konische Sackbohrung 60 vorgesehen, in der das Ende des Stahlseilzuges 14 aufgenommen und verliersicher durch Verquetschen befestigt ist. Dabei wird während des Quetschvorganges der Stahlseilzug mit seiner Kunststoffummantelung in der Sackbohrung der Spindel derart gestaucht, daß sich zwischen der Kunststoffummantelung und der konischen Bohrungsfläche ein feuchtigkeitsundurchlässiger Dichtsitz ergibt. Möglicherweise innerhalb des Stahlseilzuges 14 , d. h. zwischen der Stahllitze und der Kunststoffummantelung, befindliche Feuchtigkeit kann somit nicht in das Innere des Elektromotors gelangen.

## Patentansprüche

1. Elektromechanisch betätigbare Feststellbremse für Kraftfahrzeuge, bestehend aus einer Trommelbremse sowie einer die Trommelbremse betätigenden Betätigungseinheit, wobei die Trommelbremse zwei Bremsbacken und ein Spreizschloß aufweist, das mittels eines Kraftübertragungselements mit der Betätigungseinheit zusammenwirkt und wobei die Betätigungseinheit aus einem Elektromotor sowie einem zwischen dem Elektromotor und dem Kraftübertragungselement angeordneten Untersetzungsgetriebe besteht, wobei das Untersetzungsgetriebe (9) als ein Spindeltrieb (16,17,28,29,51) ausgebildet ist, dessen Spindel (16,28,45) das Kraftübertragungselement bildet und dessen Spindelmutter (17,29,44) mit dem Rotor (12,39) in kraftübertragender Verbindung steht und wobei der Rotor (12) des Elektromotors (8) hohl bzw. rohrförmig ausgebildet ist **dadurch gekennzeichnet, daß** der Rotor das Untersetzungsgetriebe (9) radial umgreift.

2. Elektromechanisch betätigbare Feststellbremse nach Anspruch 1, **dadurch gekennzeichnet, daß**. , daß zwischen dem Kraftübertragungselement (10,16,45) und dem Spreizschloß (5) ein Stahlseilzug (14) angeordnet ist.

3. Elektromechanisch betätigbare Feststellbremse nach Anspruch 2, **dadurch gekennzeichnet, daß** der Spindeltrieb (16,17,51) selbsthemmend ausgebildet ist.

4. Elektromechanisch betätigbare Feststellbremse nach Anspruch 2, **dadurch gekennzeichnet, daß** der Spindeltrieb (28,29,30) nicht selbsthemmend ausgebildet ist und mit einer Verriegelungseinrichtung (31) zusammenwirkt.

5. Elektromechanisch betätigbare Feststellbremse nach Anspruch 4, **dadurch gekennzeichnet, daß** der nicht selbsthemmende Spindeltrieb als ein Kugelgewindetrieb (28,29,30) ausgebildet ist.

6. Elektromechanisch betätigbare Feststellbremse nach Anspruch 4 oder 5, **dadurch gekennzeichnet, daß** die Verriegelungseinrichtung (31) durch einen axial zum Rotor (12) verschiebbaren Anker (33) eines Haftmagneten gebildet ist, der im stromlosen Zustand des Elektromotors (8) mittels einer Feder (32) mit einer Reibfläche (34) in Eingriff bringbar ist, die mit dem Rotor (12) zusammenwirkt.

7. Elektromechanisch betätigbare Feststellbremse nach Anspruch 6, **dadurch gekennzeichnet, daß** der Anker (33) durch den vom Stator (11) des Elektromotors (8) erzeugten magnetischen Streufluß betätigbar ist.

8. Elektromechanisch betätigbare Feststellbremse nach Anspruch 4 oder 5, **dadurch gekennzeichnet, daß** die Verriegelungseinrichtung durch eine mit dem Rotor zusammenwirkende elektromagnetische Bremseinrichtung gebildet ist.

9. Elektromechanisch betätigbare Feststellbremse nach einem der Ansprüche 2 bis 8, **dadurch gekennzeichnet, daß** die Spindel (16,28,45) verdrehgesichert gelagert ist.

10. Elektromechanisch betätigbare Feststellbremse nach einem der vorhergehenden Ansprüche, **dadurch gekennzeichnet, daß** das Gehäuse (3) der Betätigungseinheit (2) als Blechtiefziehteil ausgebildet ist.

11. Elektromechanisch betätigbare Feststellbremse nach Anspruch 9 und 10, **dadurch gekennzeichnet, daß** das Gehäuse (3) einen ins Innere des Rotors (12) hineinragenden, axialen rohrförmigen Fortsatz (20) aufweist, der das dem Spreizschloß (5) zugewandte Ende der Spindel (16) verdrehgesichert aufnimmt.

12. Elektromechanisch betätigbare Feststellbremse nach Anspruch 11, **dadurch gekennzeichnet, daß** der Fortsatz (20) ein Innenpolygonprofil aufweist, das mit dem entsprechend geformten Ende der Spindel (16) zusammenwirkt.

13. Elektromechanisch betätigbare Feststellbremse nach einem der vorhergehenden Ansprüche, **dadurch gekennzeichnet, daß** der Rotor (12) als ein rohrförmiges Blechtiefziehteil ausgebildet ist.

14. Elektromechanisch betätigbare Feststellbremse nach Anspruch 13, **dadurch gekennzeichnet, daß** der Rotor (12) die Spindelmutter des Spindeltriebs bildet.

15. Elektromechanisch betätigbare Feststellbremse nach Anspruch 13, **dadurch gekennzeichnet, daß** im Rotor (12) eine Kugelgewindemutter (29) eingepreßt ist.

16. Elektromechanisch betätigbare Feststellbremse nach Anspruch 13, **dadurch gekennzeichnet, daß** auf der Oberfläche des Rotors (12) Permanentmagnet-Segmente (13) aufgeklebt sind.

17. Elektromechanisch betätigbare Feststellbremse nach einem der vorhergehenden Ansprüche, **dadurch gekennzeichnet, daß** der Rotor (12) an einem Ende in einem Festlager (18) gelagert ist, das im Gehäuse (3) der Betätigungseinheit (2) durch Einrollen des Rotorendes gehalten ist.

18. Elektromechanisch betätigbare Feststellbremse nach einem der vorhergehenden, **dadurch gekennzeichnet, daß** das Gehäuse (3) der Betätigungseinheit (2) an seinem der Trommel (7) abgewandten Ende mittels eines Lagerdeckels (21) verschlossen ist, der durch Einrollen des Gehäuses (3) fixiert ist.

19. Elektromechanisch betätigbare Feststellbremse nach Anspruch 18, **dadurch gekennzeichnet, daß** der Lagerdeckel (21) ein Loslager (19) aufnimmt, in dem das andere Ende des Rotors (12) gelagert ist.

20. Elektromechanisch betätigbare Feststellbremse nach Anspruch 18 oder 19, **dadurch gekennzeichnet, daß** der Lagerdeckel (21) einen Hohlraum (22) begrenzt, der der Aufnahme einer elektronischen Schaltung zur Ansteuerung des Elektromotors (8) dient.

21. Elektromechanisch betätigbare Feststellbremse nach Anspruch 18, 19 oder 20, **dadurch gekennzeichnet, daß** der Lagerdeckel (21) aus Kunststoff besteht.

22. Elektromechanisch betätigbare Feststellbremse nach einem der Ansprüche 18 bis 21, **dadurch gekennzeichnet, daß** im Lagerdeckel (21) eine Kabeldurchführung (23) vorgesehen ist, durch die eine vorzugsweise umspritzte Anschlußleitung (24) durchführbar ist.

23. Elektromechanisch betätigbare Feststellbremse nach einem der vorhergehenden Ansprüche, **dadurch gekennzeichnet, daß** der Elektromotor ein elektronisch kommutierter Gleichstrommotor ist.

24. Elektromechanisch betätigbare Feststellbremse nach Anspruch 23, **dadurch gekennzeichnet, daß** der Stahlseizug (14) eine Stahllitze sowie eine diese umgebende Kunststoffummantelung aufweist.

25. Elektromechanisch betätigbare Feststellbremse nach Anspruch 23 oder 24, **dadurch gekennzeichnet, daß** der Stahlseilzug (14) im Kraftübertragungselement (10,16,45) verpreßt ist.

26. Elektromechanisch betätigbare Feststellbremse nach Anspruch 25, **dadurch gekennzeichnet, daß** der Stahlseilzug (14) innerhalb einer konischen Bohrung (60) des Kraftübertragungselementes (10,16,45) verpreßt ist.

27. Elektromechanisch betätigbare Feststellbremse nach einem der Ansprüche 23-26, **dadurch gekennzeichnet, daß** der Stahlseilzug (14) an seinem dem Spreizschloß (5) zugewandten Ende mit einer Zugöse bzw. einem Nippel versehen ist.

28. Elektromechanisch betätigbare Feststellbremse nach einem der Ansprüche 23-27, **dadurch gekennzeichnet, daß** der Stahlseilzug (14) mittels eines Faltenbalgs (15) geschützt ist, dessen dem Spreizschloß (5) abgewandtes Ende O-ringförmig ausgebildet ist und von einer am Gehäuse (3) der Betätigungseinheit (2) vorgesehenen, vorzugsweise kreisförmigen Vertiefung (25) aufgenommen wird.

29. Elektromechanisch betätigbare Feststellbremse nach Anspruch 28, **dadurch gekennzeichnet, daß** der Faltenbalg mit seinem dem Spreizschloß (5) zugewandten Ende mit der die Stahllitze umgebenden Kunststoffummantelung des Stahlseilzuges (14) verschweißt, vorzugsweise ultraschallverschweißt, ist.

30. Elektromechanisch betätigbare Feststellbremse nach einem der vorhergehenden Ansprüche, **dadurch gekennzeichnet, daß** der Elektromotor (8) als elektronisch kommutierter Elektromotor ausgeführt ist.

31. Elektromechanisch betätigbare Feststellbremse nach einem der vorhergehenden Ansprüche 1 bis 29, **dadurch gekennzeichnet, daß** der Elektromotor als Gleichstrom-Bürstenmotor ausgeführt ist.

32. Elektromechanisch betätigbare Feststellbremse nach einem der vorhergehenden Ansprüche, **dadurch gekennzeichnet, daß** zwischen dem Rotor (39) und dem Untersetzungsgetriebe (51) ein Planetengetriebe (50) wirkungsmäßig angeordnet ist.

33. Elektromechanisch betätigbare Feststellbremse nach Anspruch 32, **dadurch gekennzeichnet, daß** ein Ende des Rotors (39) als Sonnenrad (40) des Planetengetriebes (50) ausgebildet ist.

34. Elektromechanisch betätigbare Feststellbremse nach Anspruch 32 oder 33, **dadurch gekennzeichnet, daß** Planetenräder (41) des Planetegetriebes (50) mit einem Zahnkranz (42) zusammenwirken, der auf der Innenseite des Gehäuses (35) der Betätigungseinheit (2) ausgebildet ist.

35. Elektromechanisch betätigbare Feststellbremse nach Anspruch 34, **dadurch gekennzeichnet, daß** die Planetenräder (41) an einem radialen Steg (43) der Spindelmutter (44) angeordnet sind, und daß die Spindelmutter (44) in ihrem dem Steg (43) benachbarten Bereich mit einem Radiallager (46) zusammenwirkt, das am Gehäuse (35) der Betätigungseinheit (2) abgestützt ist.

36. Elektromechanisch betätigbare Feststellbremse nach einem der vorhergehenden Ansprüche, **dadurch gekennzeichnet, daß** das Gehäuse (3) der Betätigungseinheit (2) mit einer Einschnürung (26) versehen ist, die der Befestigung der Betätigungseinheit (2) durch Einrollen in einem Ausschnitt eines die Trommelbremse (1) vor Verunreinigungen schützenden Schmutzblechs (4) dient.

37. Elektromechanisch betätigbare Feststellbremse nach einem der vorhergehenden, **dadurch gekennzeichnet, daß** die Trommelbremse (1) als Duo-Servo-Bremse ausgeführt ist.

## Claims

1. Electromechanically actuated parking brake for motor vehicles, consisting of a drum brake and an actuating unit for actuating the drum brake, wherein the drum brake contains two brake shoes and an expanding lock that cooperates with the actuating unit by way of a power transmission element, and wherein the actuating unit consists of an electric motor and a reduction gear arranged between the electric motor and the power transmission element, wherein the reduction gear (9) is designed as a spindle drive (16, 17, 28, 29, 51), the spindle (16, 28, 45) of which forms the power transmission element and the spindle nut (17, 29, 44) of which is in force-transmitting connection with the rotor (12, 39), and wherein the rotor (12) of the electric motor (8) is realized in hollow or tubular fashion,
**characterized by** the fact that the rotor radially encompasses the reduction gear (9).

2. Electromechanically actuated parking brake according to claim 1,
**characterized by** the fact that a steel cable line (14) is arranged between the power transmission element (10, 16, 45) and the expanding lock (5).

3. Electromechanically actuated parking brake according to claim 2,
**characterized by** the fact that the spindle drive (16, 17, 51) is realized in self-locking fashion.

4. Electromechanically actuated parking brake according to claim 2,
**characterized by** the fact that the spindle drive (28, 29, 30) is not realized in self-locking fashion and cooperates with a locking mechanism (31).

5. Electromechanically actuated parking brake according to claim 4,
**characterized by** the fact that the spindle drive which is not realized in not self-locking fashion consists of a ball screw (28, 29, 30).

6. Electromechanically actuated parking brake according to claim 4 or 5,
**characterized by** the fact that the locking mechanism (31) is formed by an armature (33) of a magnetic clamp which can be displaced axially to the rotor (12) and, in the currentless state of the electric motor (8), engaged with a friction surface (34) that cooperates with the rotor (12) by means of a spring (32).

7. Electromechanically actuated parking brake according to claim 6,
**characterized by** the fact that the armature (33) is actuated by the magnetic leakage flux generated by the stator (11) of the electric motor (8).

8. Electromechanically actuated parking brake according to claim 4 or 5,
**characterized by** the fact that the locking mechanism is formed by an electromagnetic braking device that cooperates with the rotor.

9. Electromechanically actuated parking brake according to one of claims 2-8,
**characterized by** the fact that the spindle (16, 28, 45) is arranged such that it is secured from rotating.

10. Electromechanically actuated parking brake according to one of the previous claims,
**characterized by** the fact that the housing (3) of the actuating unit (2) is realized in the form of a deep-drawn sheet metal part.

11. Electromechanically actuated parking brake according to claims 9 and 10,
**characterized by** the fact that the housing (3) contains an axial tubular extension (20) that protrudes into the interior of the rotor (12) and accommodates the end of the spindle (16) which faces the expanding lock (5), namely such that the spindle end is secured from rotating.

12. Electromechanically actuated parking brake according to claim 11,
**characterized by** the fact that the extension (20) has a polygonal inner profile that cooperates with the correspondingly shaped end of the spindle (16).

13. Electromechanically actuated parking brake according to one of the previous claims,
**characterized by** the fact that the rotor (12) is realized in the form of a tubular deep-drawn sheet metal part.

14. Electromechanically actuated parking brake according to claim 13,
**characterized by** the fact that the rotor (12) forms the spindle nut of the spindle drive.

15. Electromechanically actuated parking brake according to claim 13,
**characterized by** the fact that a ball screw nut (29) is pressed into the rotor (12).

16. Electromechanically actuated parking brake according to claim 13,
**characterized by** the fact that permanent magnet segments (13) are bonded onto the surface of the rotor (12).

17. Electromechanically actuated parking brake according to one of the previous claims,
**characterized by** the fact that one end of the rotor (12) is arranged in a fixed bearing (18) that is held in the housing (3) of the actuating unit (2) by rolling up the rotor end.

18. Electromechanically actuated parking brake according to one of the previous claims,
**characterized by** the fact that the end of the housing (3) of the actuating unit (2) which faces away from the drum (7) is closed with a bearing cover (21) that is fixed by rolling up the housing (3).

19. Electromechanically actuated parking brake according to claim 18,
**characterized by** the fact that the bearing cover (21) accommodates a movable bearing (19), in which the other end of the rotor (12) is arranged.

20. Electromechanically actuated parking brake according to claim 18 or 19,
**characterized by** the fact that the bearing cover (21) limits a hollow space (22) that serves for accommodating the electronic circuit for controlling the electric motor (8).

21. Electromechanically actuated parking brake according to claim 18, 19 or 20,
**characterized by** the fact that the bearing cover (21) consists of plastic.

22. Electromechanically actuated parking brake according to one of claims 18-21,
**characterized by** the fact that a cable guide (23) is provided in the bearing cover (21), wherein a preferably extrusion-coated connecting line (24) extends through said cable guide.

23. Electromechanically actuated parking brake according to one of the previous claims,
**characterized by** the fact that the electric motor is an electronically commutated d.c. motor.

24. Electromechanically actuated parking brake according to claim 23,
**characterized by** the fact that the steel cable line (14) contains a steel strand as well as a plastic sheathing that surrounds the steel strand.

25. Electromechanically actuated parking brake according to claim 23 or 24,
**characterized by** the fact that the steel cable line (14) is pressed into the power transmission element (10, 16, 45) .

26. Electromechanically actuated parking brake according to claim 25,
**characterized by** the fact that the steel cable line (14) is pressed into a conical bore (60) in the power transmission element (10, 16, 45).

27. Electromechanically actuated parking brake according to one of claims 23-26,
**characterized by** the fact that the end of the steel cable line (14) which faces the expanding lock (5) is provided with a drawbar eye or a nipple, respectively.

28. Electromechanically actuated parking brake according to one of claims 23-27,
**characterized by** the fact that the steel cable line (14) is protected by a bellows (15), wherein the end of the bellows which faces away from the expanding lock (5) is realized in the shape of an O-ring and is accommodated by a preferably circular depression (25) provided in the housing (3) of the actuating unit (2).

29. Electromechanically actuated parking brake according to claim 28,
**characterized by** the fact that the end of the bellows which faces the expanding lock (5) is welded to the plastic sheathing of the steel cable line (14) which surrounds the steel strand, preferably by means of ultrasonic welding.

30. Electromechanically actuated parking brake according to one of the previous claims,
**characterized by** the fact that the electric motor (8) is realized in the form of an electronically commutated electric motor.

31. Electromechanically actuated parking brake according to one of the previous claims 1-29,
**characterized by** the fact that the electric motor is realized in the form of a DC brush motor.

32. Electromechanically actuated parking brake according to one of the previous claims,
**characterized by** the fact that a planetary gear (50) is arranged between the rotor (39) and the reduction gear (51) in terms of effect.

33. Electromechanically actuated parking brake according to claim 32,
**characterized by** the fact that one end of the rotor (39) is realized in the form of a sun wheel (40) of the planetary gear (50).

34. Electromechanically actuated parking brake according to claim 32 or 33,
**characterized by** the fact that planet wheels (41) of the planetary gear (50) cooperate with a ring gear (42) formed an the inner side of the housing (35) of the actuating unit (2).

35. Electromechanically actuated parking brake according to claim 34,
**characterized by** the fact that the planet wheels (41) are arranged at a radial web (43) of the spindle nut (44), and by the fact that the spindle nut (44) cooperates with a radial bearing (46) that is supported an the housing (35) of the actuating unit (2) within its region that is situated adjacent to the web (43).

36. Electromechanically actuated parking brake according to one of the previous claims,
**characterized by** the fact that the housing (3) of the actuating unit (2) is provided with a constriction (26) that serves for mounting the actuating unit (2) by rolling up the edges of a cutout in a dirt trap (4) that protects the drum brake (1) from the admission of dirt.

37. Electromechanically actuated parking brake according to one of the previous claims,
**characterized by** the fact that the drum brake (1) is realized in the form of a dual power brake.

## Revendications

1. Frein de stationnement commandé de manière mécano-électrique pour des automobiles, comportant un frein à tambour et une unité à manoeuvre commandant le frein à tambour, le frein à tambour comportant deux segments de mâchoire et un expandeur verrouillage coopérant par l'intermédiaire d'un élément à transmission de force avec l'unité à manoeuvre, et l'unité à manoeuvre comportant un électro-moteur et un démultiplicateur disposé entre l'électro-moteur et l'élément à transmission de force, le démultiplicateur (9) étant formé comme commande à broches (16, 17, 28, 29, 51), les broches (16, 28, 45) de laquelle formant l'élément à transmission de force et l'écrou-broche (17, 29, 44) de laquelle ayant rapport au rotor (12, 39) de manière transmettant de force et le rotor (12) de l'électro-moteur (8) étant sous forme creuse ou tubulaire,
**caractérisé en ce que** le rotor radialement entourne le démultiplicateur (9).

2. Frein de stationnement commandé de manière mécano-électrique selon la revendication 1,
**caractérisé en ce qu'**un brin de câble en acier (14) est disposé entre l'élément à transmission de force (10, 16, 45) et l'expandeur verrouillage (5).

3. Frein de stationnement commandé de manière mécano-électrique selon la revendication 2,
**caractérisé en ce que** la commande à broches (15, 17, 51 ) est formée de manière autobloquante.

4. Frein de stationnement commandé de manière mécano-électrique selon la revendication 2,
**caractérisé en ce que** la commande à broches (28, 29, 30) est formée sans blocage automatique et coopère avec un dispositif verrouillage (31 ).

5. Frein de stationnement commandé de manière mécano-électrique selon la revendication 4,
**caractérisé en ce que** la commande à broches non-autobloquante est formée comme commande filetée à boulet (28, 29, 30).

6. Frein de stationnement commandé de manière mécano-électrique selon les revendications 4 ou 5,
**caractérisé en ce que** le dispositif à verrouillage (31) est formé par une armature d'un aimant axialement décalable au rotor (12) qui est engrenable, en état sans courant de l'électromoteur, par l'intermédiaire de ressort (32), avec une surface frottante (34) coopérant avec le rotor (12).

7. Frein de stationnement commandé de manière mécano-électrique selon la revendication 6,
**caractérisé en ce que** l'armature (33) peut être actionnée par le flux de fuite magnétique généré par le stator (11) de l'électromoteur (8).

8. Frein de stationnement commandé de manière mécano-électrique selon les revendications 4 ou 5,
**caractérisé en ce que** le dispositif de verrouillage est formé par une unité de frein électromagnétique coopérant avec le rotor.

9. Frein de stationnement commandé de manière mécano-électrique selon les revendications 2 à 8,
**caractérisé en ce que** les broches (16, 28, 45) sont disposées de manière sans torsion.

10. Frein de stationnement commandé de manière mécano-électrique selon l'une des revendications précédentes,
**caractérisé en ce que** le boîtier (3) de l'unité de commande (2) est de forme de partie de tôle à emboutir.

11. Frein de stationnement commandé de manière mécano-électrique selon les revendications 9 et 10,
**caractérisé en ce que** le boîtier (3) comporte une extension (20) axiale et tubulaire saillant dans l'intérieur du rotor (12) et accueillant, de manière sans torsion, l'extrémité de la broche (16) faisant face à l'expandeur verrouillage (5).

12. Frein de stationnement commandé de manière mécano-électrique selon la revendication 11,
**caractérisé en ce que** l'extension (20) comporte un profil intérieur en polygones coopérant avec l'extrémité de la broche (16) de forme correspondante.

13. Frein de stationnement commandé de manière mécano-électrique selon l'une des revendications précédentes,
**caractérisé en ce que** le rotor (12) est sous forme d'une partie de tôle à emboutir.

14. Frein de stationnement commandé de manière mécano-électrique selon la revendication 13,
**caractérisé en ce que** le rotor (12) forme l'écrou de la commande à broches.

15. Frein de stationnement commandé de manière mécano-électrique selon la revendication 13,
**caractérisé en ce qu'**un filet d'écrou sphérique (29) est enfoncé dans le rotor (12).

16. Frein de stationnement commandé de manière mécano-électrique selon la revendication 13,
**caractérisé en ce que** des segments d'aimant permanent (13) sont englués sur la surface du rotor (12).

17. Frein de stationnement commandé de manière mécano-électrique selon l'une des revendications précédentes,
**caractérisé en ce que** le rotor (12) à l'une extrémité est disposé dans un palier fixe (18) retenu dans le boîtier (3) de l'unité de commande (2) par roulage de l'extrémité de rotor.

18. Frein de stationnement commandé de manière mécano-électrique selon l'une des revendications précédentes,
**caractérisé en ce que** le boîtier (3) de l'unité de commande (2) à son extrémité détournée du tambour (7), est fermé par un chapeau de palier (21) fixé par enroulage du boîtier (3).

19. Frein de stationnement commandé de manière mécano-électrique selon la revendication 18,
**caractérisé en ce que** le chapeau du palier (21) accueille un palier mobile (19) dans lequel est disposé l'autre l'extrémité du rotor (12).

20. Frein de stationnement commandé de manière mécano-électrique selon les revendications 18 ou 19,
**caractérisé en ce que** le chapeau de palier (21) forme un vide (22) pour accueillir un circuit électronique actionnant l'électromoteur (8).

21. Frein de stationnement commandé de manière mécano-électrique selon les revendications 18, 19 ou 20,
**caractérisé en ce que** le chapeau de palier (21) est formé de matière plastique.

22. Frein de stationnement commandé de manière mécano-électrique selon les revendications 18 à 21,
**caractérisé en ce qu'**un passe-cable est prévu dans le chapeau de palier (21) à travers duquel est passé une conduite de raccordement (24) préférablement encastrée.

23. Frein de stationnement commandé de manière mécano-électrique selon l'une des revendications précédentes,
**caractérisé en ce que** l'électromoteur forme un moteur à courant continu commuté électroniquement.

24. Frein de stationnement commandé de manière mécano-électrique selon la revendication 23,
**caractérisé en ce que** le brin de câble (14) comporte un toron en acier et une enveloppe en matière plastique entournant la première.

25. Frein de stationnement commandé de manière mécano-électrique selon les revendications 23 ou 24,
**caractérisé en ce que** le brin de câble en acier (14) est enfoncé dans l'élément à transmission de force (10, 16, 45).

26. Frein de stationnement commandé de manière mécano-électrique selon la revendication 25,
**caractérisé en ce que** le brin de câble en acier (14) est enfoncé dans un alésage (60) conique de l'élément à transmission de force (10, 16, 45).

27. Frein de stationnement commandé de manière mécano-électrique selon les revendications 23 à 26,
**caractérisé en ce que** le brin de câble en acier (14) à son extrémité faisant face à l'expandeur verrouillage (5) est prévu d'un oeillet de traction respectivement d'un nipple.

28. Frein de stationnement commandé de manière mécano-électrique selon les revendications 23 à 27,
**caractérisé en ce que** le brin de câble en acier (14) est protégé par l'intermédiaire d'un accordéon (15), l'extrémité duquel détournée de l'expandeur verrouillage (5) est sous forme d'un anneau O et est accueillie par une cavité (25) préférablement sous forme circulaire prévue au boîtier (3) de l'unité de commande (2).

29. Frein de stationnement commandé de manière mécano-électrique selon la revendication 28,
**caractérisé en ce que** l'accordéon avec son extrémité faisant face à l'expandeur verrouillage (5) est soudé, préférablement ultra-soudé, à l'enveloppe en matière plastique du brin de câble en acier (14) entournant le toron en acier.

30. Frein de stationnement commandé de manière mécano-électrique selon l'une des revendications précédentes,
**caractérisé en ce que** l'électromoteur (8) est configuré comme électromoteur électroniquement commuté.

31. Frein de stationnement commandé de manière mécano-électrique selon l'une des revendications précédentes 1 à 29,
**caractérisé en ce que** l'électromoteur est configuré comme moteur de brosses à courant continu.

32. Frein de stationnement commandé de manière mécano-électrique selon l'une des revendications précédentes,
**caractérisé en ce qu'**un engrenage planétaire (50) est effectivement disposé entre le rotor (39) et le démultiplicateur (51).

33. Frein de stationnement commandé de manière mécano-électrique selon la revendication 32,
**caractérisé en ce que** l'une extrémité du rotor (39) est configurée comme roue solaire (40) d'engrenage planétaire (50).

34. Frein de stationnement commandé de manière mécano-électrique selon l'une des revendications précédentes 32 ou 33,
**caractérisé en ce que** des roues (41) d'engrenage planétaire (50) coopèrent avec une couronne dentée (42) formée sur le côté intérieure du boîtier (35) de l'unité de commande (2).

35. Frein de stationnement commandé de manière mécano-électrique selon la revendication 34,
**caractérisé en ce que** les roues planétaires (41) sont disposées sur une traverse (43) radiale de l'écrou (44), et que l'écrou (44) dans la région proche de la traverse (43) coopère avec un palier radial (46) supporté au boîtier (35) de l'unité de commande (2).

36. Frein de stationnement commandé de manière mécano-électrique selon l'une des revendications précédentes,
**caractérisé en ce que** le boîtier (3) de l'unité de commande (2) est prévu d'une gorge (26) servant à fixer l'unité de commande (2) par enroulage dans une coupe d'un décrasseur (4) protégeant le frein à tambour (1) contre la souillure.

37. Frein de stationnement commandé de manière mécano-électrique selon l'une des revendications précédentes,
**caractérisé en ce que** le frein à tambour (1) est configuré comme frein duo servo.
